# DEMANDE DE BREVET EUROPEEN

(11) **EP 2 361 663 A1**
(43) Date de publication de la demande: **31.08.2011**
(21) Numéro de dépôt: 10176542.8
(22) Date de dépôt: 14.09.2010
(51) Int. Cl.: B01D 29/11

(54) **Panneau filtrant pour circuit d'injection de sécurité et d'aspersion d'un réacteur nucléaire**

(30) Priorité: 28.01.2010 FR 1000339
(71) Demandeur: Bertin Technologies, 78180 Montigny-le-Bretonneux (FR)
(72) Inventeur: Chastang, Georges, 78310 COIGNIERES (FR); Dubus, Philippe, 92130 ISSY LES MOULINEAUX (FR); Kung, Thierry, 78000 VERSAILLES (FR)
(74) Mandataire: Ramey, Daniel

(57) **Abrégé**

L'invention concerne un panneau filtrant (1) pour un circuit d'injection de sécurité et d'aspersion d'un réacteur nucléaire, comportant une tôle support (2) sur laquelle est fixée au moins une tôle perforée (3, 4) ou au moins une toile métallique, la tôle support et la tôle perforée ou toile métallique ménageant entre elles au moins un canal (11) de circulation d'eau de refroidissement, ledit canal (11) comportant une extrémité ouverte de sortie d'eau. La tôle perforée (3, 4) ou la toile métallique est fixée à la tôle support (2) par des moyens d'accrochage (6, 9, 10) ou par boulonnage.

## Description

La présente invention concerne un panneau filtrant pour un circuit d'injection de sécurité et d'aspersion d'un réacteur nucléaire.

Dans un réacteur nucléaire, un circuit primaire d'eau comprend une pompe de circulation d'eau en circuit fermé dans la cuve du réacteur et dans un échangeur générateur de vapeur. L'eau du circuit primaire est chauffée dans la cuve du générateur au contact du combustible nucléaire, cette chaleur étant ensuite cédée dans l'échangeur à un fluide secondaire qui se vaporise, cette vapeur étant utilisée dans des turboalternateurs générant de l'électricité.

Le bâtiment renfermant le réacteur constitue une enceinte de confinement étanche en béton qui est intérieurement recouverte d'un revêtement formant peau d'étanchéité.

La cuve du réacteur et le circuit primaire sont enfermés dans une autre enceinte en béton appelée « barrière anti-missile », réalisée à l'intérieur de l'enceinte de confinement et délimitant un espace annulaire avec la peau d'étanchéité de cette dernière.

Le rôle de la barrière anti-missile est de protéger les appareils disposés dans l'espace annulaire et d'assurer l'étanchéité de l'enceinte de confinement contre d'éventuelles projections accidentelles provenant du coeur du réacteur ou du circuit primaire.

Lorsque le couvercle de la cuve du réacteur est enlevé, la partie supérieure de la cuve débouche au fond d'une piscine remplie d'eau piégeant les radiations lors des opérations d'extraction et de rechargement de combustible. Lors du fonctionnement du réacteur, la piscine est vidée et l'eau est stockée dans un réservoir d'attente.

Une brèche dans le circuit primaire causerait une élévation excessive de température dans le coeur du réacteur, provoquant sa fusion. En outre, l'eau du circuit primaire se vaporiserait dans l'enceinte de confinement et pressuriserait cette dernière, provoquant un risque de rupture de l'enceinte.

Afin de pallier les conséquences d'une brèche, il est prévu de refroidir le coeur du réacteur par injection d'eau. En outre, il est prévu de pulvériser de l'eau afin de condenser la vapeur produite par la brèche dans l'enceinte de confinement et afin de refroidir les parois de cette enceinte. Durant une première phase, l'eau utilisée est puisée dans le réservoir d'attente. Dans une seconde phase, lorsque le réservoir d'attente est vide, l'eau de ruissellement qui est collectée dans un espace annulaire situé en partie basse de l'enceinte de confinement, alimente le circuit d'injection de sécurité et d'aspersion du réacteur nucléaire.

Cet espace annulaire est équipé de modules filtrants agencés en série et filtrant l'eau de ruissellement avant qu'elle ne soit reprise dans un canal de collecte et de circulation d'eau. Les modules permettent de retenir les débris produits en cas d'accident, afin d'éviter l'endommagement des pompes et des buses d'injection et de pulvérisation d'eau.

Un module filtrant comporte plusieurs panneaux filtrants parallèles comprenant chacun deux tôles perforées ondulées et soudées sur une tôle support, qui ménagent entre elles et la tôle support des canaux de circulation comportant chacun une extrémité de sortie d'eau tournée vers le canal de collecte.

L'eau de ruissellement est donc filtrée au travers des fines perforations des tôles ondulées puis s'écoule dans les canaux de circulation des panneaux filtrants jusque dans le canal de collecte où elle est puisée à l'aide des pompes.

L'inconvénient de tels panneaux filtrants est que la fixation par soudure des tôles perforées sur la tôle support est une opération complexe à réaliser qui nécessite de la main d'oeuvre qualifiée. En outre, les soudures favorisent la corrosion et génèrent des déformations des tôles. Les jeux apparaissant du fait de ces déformations sont compensés par l'ajout de joints d'étanchéité.

L'invention a notamment pour but d'apporter une solution simple, efficace et économique à ces problèmes.

A cet effet, elle propose un panneau filtrant pour un circuit d'injection de sécurité et d'aspersion d'un réacteur nucléaire, comportant une tôle support sur laquelle est fixée au moins un élément filtrant tel qu'une tôle perforée ou une toile métallique, la tôle support et l'élément filtrant ménageant entre eux au moins un canal de circulation d'eau de refroidissement, ledit canal comportant une extrémité ouverte de sortie d'eau, caractérisé en ce que l'élément filtrant est fixé à la tôle support par des moyens d'accrochage ou par boulonnage.

Les moyens d'accrochage ou les boulons permettent de fixer simplement, rapidement et avec précision la ou les tôles perforées ou les toiles métalliques sur la tôle support. Ce type de fixation n'engendre en outre pas de déformation locale, de sorte que l'ajout de joints d'étanchéité supplémentaires est inutile.

Selon une caractéristique de l'invention, les moyens d'accrochage comportent des ouvertures ménagées dans la tôle support, coopérant avec des crochets de l'élément filtrant, ou inversement.

Avantageusement, le panneau filtrant comporte une pluralité de tôles perforées adjacentes les unes aux autres.

Dans un mode de réalisation préféré de l'invention, la ou chaque tôle perforée a une section en W, de façon à offrir une bonne résistance aux chocs et une surface de filtration importante.

Préférentiellement, le panneau filtrant comporte au moins deux éléments filtrants, accrochés de part et d'autre de la tôle support.

La surface de filtration est donc augmentée.

Selon une autre caractéristique de l'invention, le panneau filtrant comporte deux profilés inférieur et supérieur en U, montés et fixés par accrochage sur les bords inférieur et supérieur de la tôle support, le profilé inférieur comportant des ouvertures de passage de l'eau de refroidissement, disposées en regard des extrémités ouvertes des canaux de circulation d'eau de refroidissement, les autres extrémités desdits canaux étant fermées par le profilé supérieur.

Selon une caractéristique de l'invention, des crochets sont formés sur les bords verticaux et/ou horizontaux des tôles perforées et/ou de la tôle support.

Selon une variante de réalisation de l'invention, l'élément filtrant est ondulé et présente des zones en creux en appui contre la tôle support et des zones en saillie, l'élément filtrant étant fixé à la tôle support à l'aide de boulons montés dans certaines des zones en creux et comportant un écrou et/ou une tête de vis de section générale triangulaire ou trapézoïdale, ayant deux faces obliques d'appui sur des flancs inclinés de l'élément filtrant.

Cette variante permet également de fixer simplement, rapidement et avec précision le ou les éléments filtrants sur la tôle support, le boulonnage n'engendrant pas de déformation locale des tôles.

Selon une possibilité de l'invention, les moyens d'accrochage comportent des moyens de pincement d'au moins un bord de l'élément filtrant.

Avantageusement, l'élément filtrant étant ondulé et présentant des zones en creux, les moyens de pincement comportent deux profilés agencés de part et d'autre de l'élément filtrant et comprenant chacun des dents insérées dans les zones en creux correspondantes, de manière à coincer le bord de l'élément filtrant entre les profilés.

L'invention concerne en outre un module filtrant destiné à un circuit d'injection de sécurité et d'aspersion d'un réacteur nucléaire, caractérisé en ce qu'il comporte une pluralité de panneaux filtrants du type précité, qui sont espacés les uns des autres par l'intermédiaire d'entretoises, et sont montés sur un châssis comportant un caisson inférieur formant canal de collecte et de circulation d'eau.

Avantageusement, le module filtrant comporte deux éléments de renforcement comprenant chacun des poutres agencées en croix et s'étendant en travers des extrémités des panneaux sur deux faces latérales verticales du module.

De manière préférée, le châssis comporte des plaques ajourées, disposées sous les panneaux filtrants, et dont les dimensions des ouvertures de passage d'eau sont déterminées pour une uniformisation des débits dans plusieurs modules disposés en série.

De cette façon, on s'assure que l'eau est filtrée de manière uniforme tout le long de l'espace annulaire dans lequel sont disposés les modules.

Le canal d'un module filtrant peut être relié au canal d'un module adjacent par des joints en V en acier inoxydable montés par élasticité entre les brides d'extrémité des canaux des deux modules.

L'invention sera mieux comprise et d'autres détails, caractéristiques et avantages de l'invention apparaîtront à la lecture de la description suivante faite à titre d'exemple non limitatif en référence aux dessins annexés dans lesquels :
- les figures 1 et 2 sont des vues en perspective d'un panneau filtrant selon l'invention ;
- la figure 3 est une vue de détail de la figure 1, montrant une extrémité du profilé supérieur du panneau filtrant ;
- la figure 4 est une vue de détail de la figure 2, montrant une extrémité du profilé inférieur du panneau filtrant ;
- la figure 5 est une vue en perspective d'une tôle support de part et d'autre de laquelle sont accrochées deux tôles perforées ;
- la figure 6 est une vue de détail de la figure 5 montrant les crochets servant à l'accrochage des tôles perforées sur la tôle support ;
- la figure 7 est une vue de dessus de la tôle support et des tôles perforées ;
- la figure 8 est une vue en perspective des tôles perforées et de la tôle support, selon une variante de réalisation de l'invention ;
- la figure 9 est une vue de détail de la variante de réalisation, montrant des boulons servant à la fixation des tôles aux bords latéraux du panneau ;
- la figure 10 est une vue de détail de la variante de réalisation, montrant les autres boulons servant à la fixation des tôles ;
- les figures 11 et 12 sont des vues éclatées et en perspective, d'une variante de réalisation de l'invention ;
- la figure 13 est une vue de détail illustrant la fixation de l'extrémité inférieure d'une toile ;
- la figure 14 est une vue en perspective et de dessous du panneau des figures 11 à 13 ;
- la figure 15 est une vue de détail illustrant la fixation du bord inférieur de la tôle centrale.
- la figure 16 est une vue en perspective d'un module filtrant équipé des panneaux filtrants des figures 1 à 15 ;
- la figure 17 est une vue schématique en perspective de la jonction des canaux de deux modules adjacents ;
- la figure 18 est une vue partielle agrandie et en coupe du joint entre deux modules ;
- la figure 19 est une vue de face du joint.

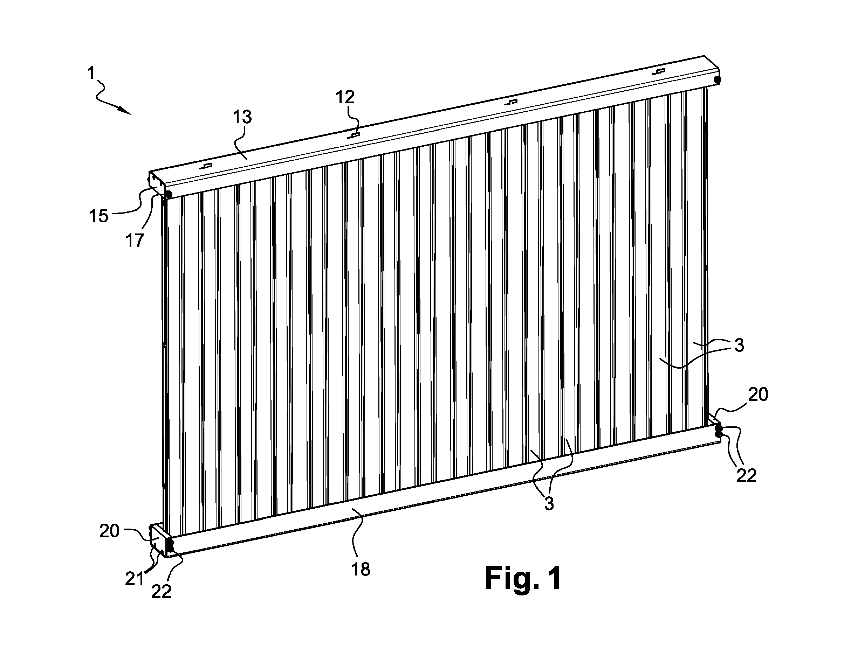

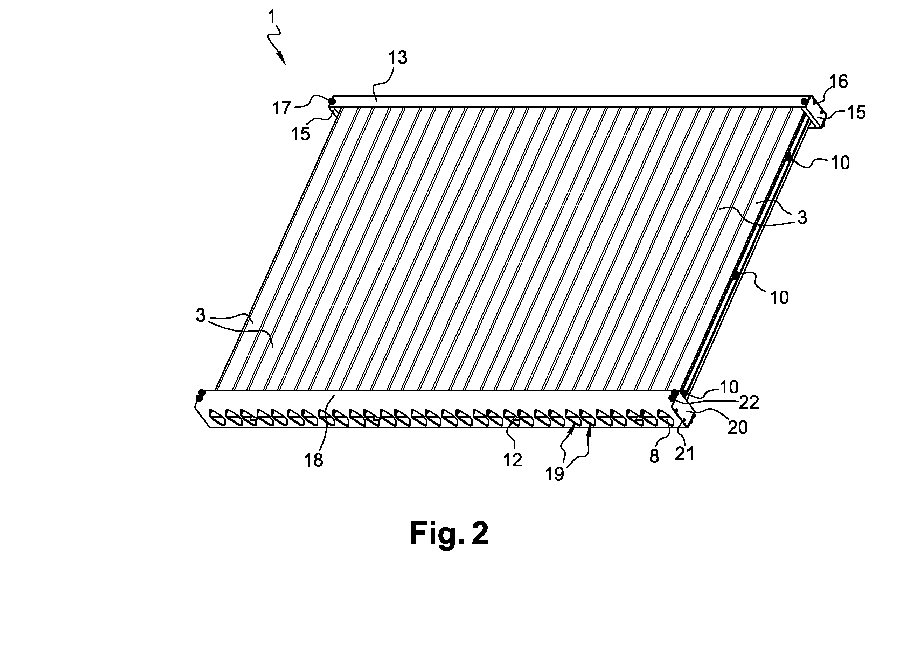

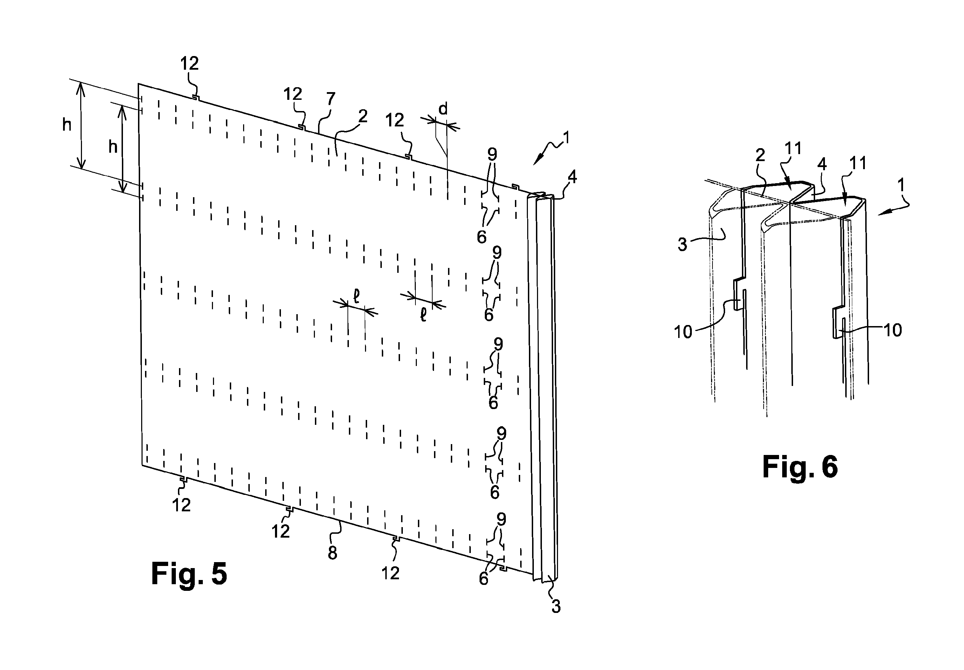

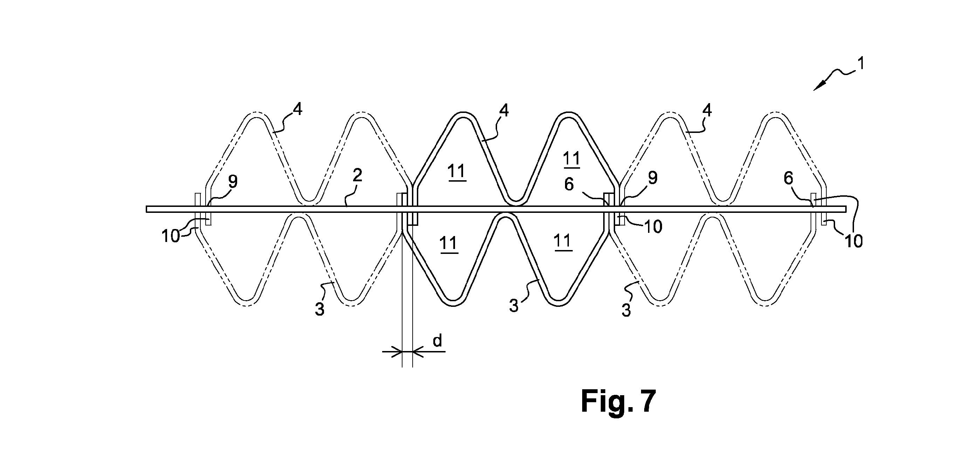

Un panneau filtrant 1 selon l'invention pour un circuit d'injection de sécurité et d'aspersion d'un réacteur nucléaire est représenté aux figures 1 à 7. Il comporte une tôle support plane 2 (voir figures 5 et 7), de forme rectangulaire, de part et d'autre de laquelle sont fixées des tôles ondulées 3, 4, plus particulièrement des tôles de section en W. Ces tôles sont formées par pliage avec une bonne précision dimensionnelle, ce qui permet de les fixer côte à côte sur la tôle support de façon sensiblement étanche.

Comme cela est visible à la figure 5, la tôle support 2 comporte des premières séries de cinq ouvertures 6 alignées verticalement et régulièrement réparties d'un bord supérieur 7 à un bord inférieur 8 de la tôle support 2. Les premières séries d'ouvertures 6 sont écartées horizontalement d'une distance 1, les ouvertures 6 d'une même série étant écartées verticalement d'une distance h. La tôle support 5 comporte en outre des secondes séries de cinq ouvertures 9, similaires à celles décrites ci-dessus. Les secondes séries d'ouvertures 9 sont écartées horizontalement d'une distance 1, les ouvertures 9 d'une même série étant écartées verticalement d'une distance h.

Les ouvertures 9 de la seconde série sont disposées un peu au-dessus des ouvertures 6 de la première série et sont légèrement décalées horizontalement d'une distance d, comme cela est mieux visible à la figure 7.

Le panneau filtrant 1 comporte en outre des premières tôles 3 de section en W, disposées de manière adjacentes les unes aux autres et accrochées d'un côté de la tôle support 2.

Chaque tôle ondulée 3 comporte ainsi deux bords latéraux verticaux, formés par les extrémités du W, équipés de crochets 10 insérés dans les ouvertures 6 des premières séries correspondantes. L'accrochage est réalisé par insertion des crochets 10 dans les ouvertures 6 puis déplacement des premières tôles vers le bas de manière à ce que les crochets soient verrouillés sur les bords des ouvertures 6 de la tôle support 2. Les bords latéraux de chaque tôle sont des bords droits, perpendiculaires à la tôle support et les bords latéraux de deux tôles adjacentes sont appliqués l'un sur l'autre de façon sensiblement étanche.

Le panneau filtrant 1 comporte en outre des secondes tôles 4 de section en W et comportant des crochets 10, disposées de l'autre côté de la tôle support 2. Les crochets 10 des secondes tôles 4 sont insérés dans les ouvertures 9 des secondes séries correspondantes et accrochés ou verrouillés sur la tôle support 2 de la même manière que précédemment. Le léger décalage horizontal des premières et secondes séries d'ouvertures 6, 9 permet aux crochets 10 de traverser librement les ouvertures, sans être bloqués par les tôles opposées 4, 3.

Chaque tôle 3, 4 en W comporte des perforations de faible diamètre (non visibles), agencées en quinconce les unes par rapport aux autres.

Les tôles perforées 3, 4 et la tôle support 2 définissent entre elles des canaux de circulation d'eau 11. Plus particulièrement, chaque tôle perforée 3, 4 définit deux canaux parallèles verticaux 11 avec la tôle support 2.

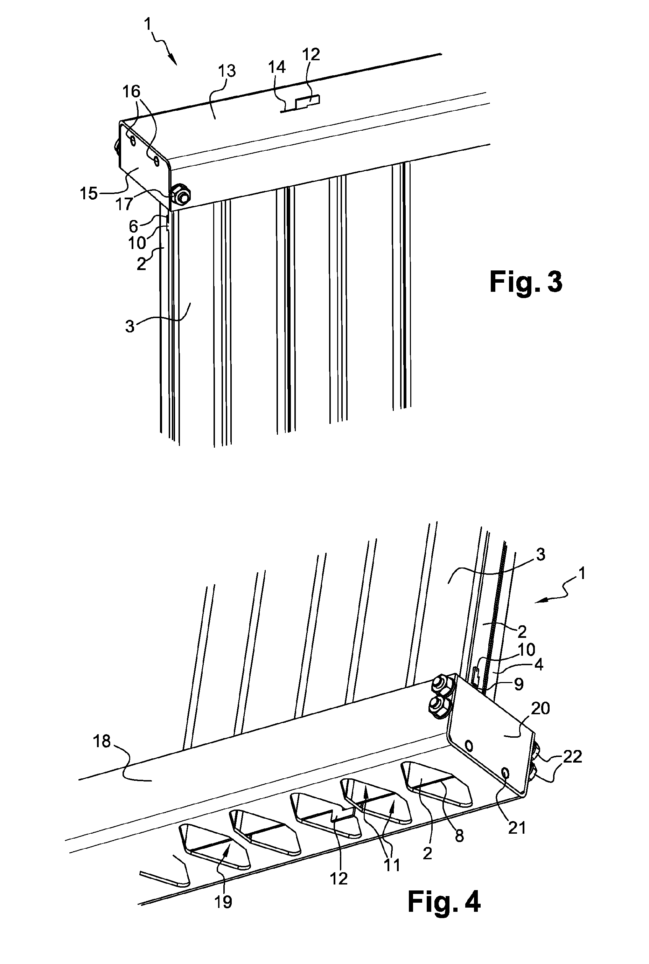

Les bords horizontaux supérieur et inférieur 7, 8 de la tôle support 2 sont équipés de crochets 12, tournés dans le même sens, comme cela est mieux visible aux figures 3 et 4.

Le panneau filtrant est équipé en outre d'un profilé supérieur 13 de section en U, recouvrant le bord supérieur des tôles perforées 3, 4 et de la tôle support 2.

Le profilé supérieur 13 comporte des ouvertures 14 (figure 3) permettant l'accrochage des crochets 12 de la tôle support 2 et est équipé de deux plaques 15 fermant ses extrémités. Chaque plaque 15 comporte deux trous taraudés 16 parallèles à l'axe du profilé et est traversée perpendiculairement par un boulon 17 de fixation de la plaque 15 au profilé 13. Le panneau 1 comporte de plus un profilé inférieur 18 de section en U, recouvrant le bord inférieur des tôles perforées 3, 4 et de la tôle support 2.

Le profilé inférieur 18 comporte des ouvertures 19 en forme générale de losange, les crochets 12 venant se verrouiller sur les bords de certaines ouvertures 19.

Chaque ouverture 19 est ménagée en regard de deux canaux opposés 11, situés de part et d'autre de la tôle support 2. La forme des ouvertures 19 est complémentaire de celle des canaux opposés 11.

Le profilé inférieur 18 est équipé de deux plaques 20 fermant ses extrémités. Chaque plaque 20 comporte deux trous taraudés 21 parallèles à l'axe du profilé et est traversée perpendiculairement par deux boulons 22 de fixation de la plaque 20 au profilé 18.

Les écrous des boulons 17, 22 sont disposés à l'extérieur des canaux de circulation d'eau 11, de façon à ce qu'en cas de desserrage, ces écrous ne puissent pas être aspirés par la pompe.

Bien évidemment, les dimensions des panneaux 1 peuvent être adaptées en fonction des besoins.

Dans un exemple de réalisation, chaque panneau a une longueur de 1300 mm et une hauteur de 1 100 mm, les perforations des tôles sont des trous d'un diamètre de 2 mm, agencés en quinconce, et la somme des surfaces des trous d'une tôle représente 35 % de la surface de la tôle.

En variante, chaque panneau 1 pourrait comporter des tôles perforées sur une seule face de la tôle support 2 et la tôle support 2 pourrait être courbe.

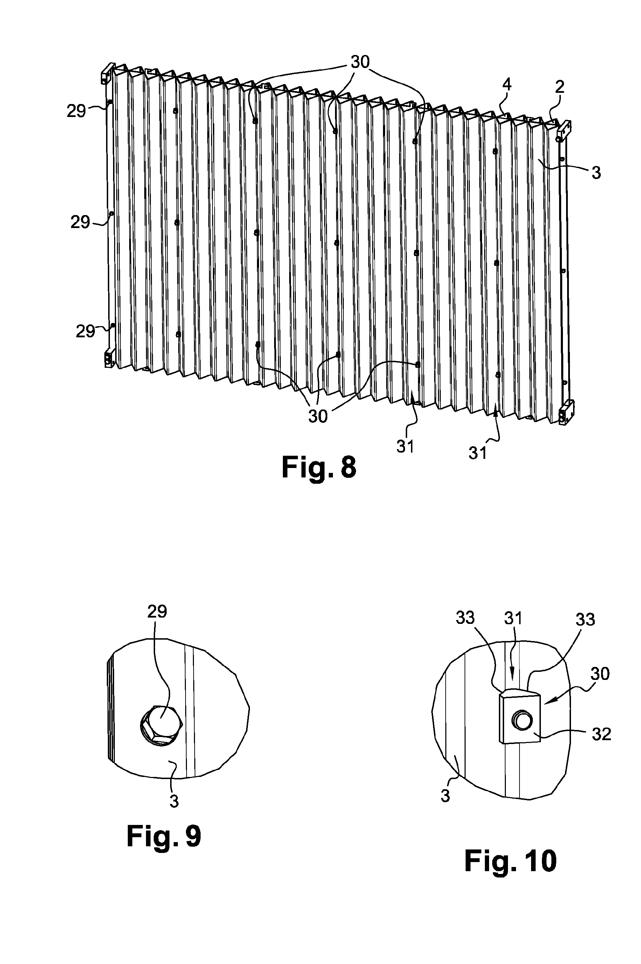

Les figures 8 à 10 illustrent une variante de réalisation de l'invention dans laquelle les tôles perforées 3,4 sont de grande longueur et sont fixées à la tôle support 2 à l'aide de boulons, chaque tôle 3, 4 faisant la longueur d'un panneau filtrant.

Des boulons classiques 29, c'est-à-dire comportant une tête de vis et un écrou hexagonaux, sont utilisés aux bords latéraux du panneau (figure 9).

En outre, les tôles 2 à 4 sont fixées entre elles à l'aide de boulons 30 disposés au niveau des zones en creux 31 des tôles perforées 3, 4. Plus particulièrement, la tôle support 2 comporte des trous de passage d'une vis, la tête de vis et l'écrou 32 des boulons 30 présentant chacun une forme générale triangulaire ou trapézoïdale, ayant deux faces obliques 33 d'appui sur des flancs inclinés des tôles perforées 3, 4 (figure 10).

Les panneaux filtrants comprenant les tôles ondulées 3, 4 sont équipés de profilés supérieur et inférieur montés par accrochage, comme déjà décrit en référence aux figures 1 à 6.

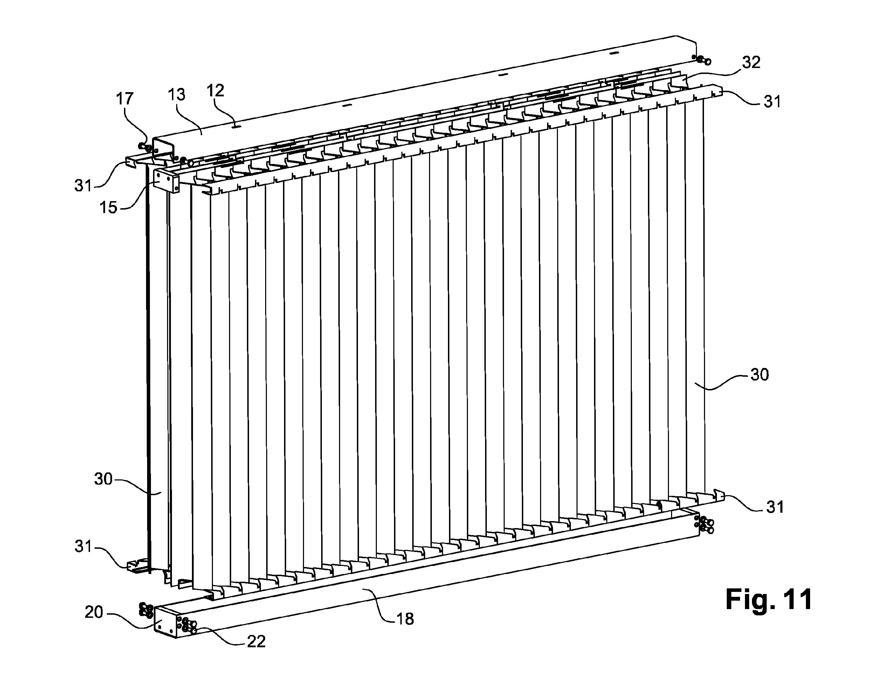

Les figures 11 à 15 montrent une variante de réalisation de l'invention, dans laquelle les tôles 3, 4 ondulées et perforées sont remplacées par des toiles métalliques 30 tissées et ondulées, montées de part et d'autre de la tôle support 2 et s'étendant sur toute la surface de celle-ci. Ces toiles 30 assurent la filtration de l'eau, de la même façon que les tôles 3, 4 précédemment décrites.

Chaque toile 30 est préformée avec des ondulations comme représenté et est fixée à l'aide de moyens d'accrochage comportant chacun un profilé externe en U 31, fixé sur le profilé inférieur ou supérieur 18, 13, et un profilé en L 32, fixé sur la tôle support 2.

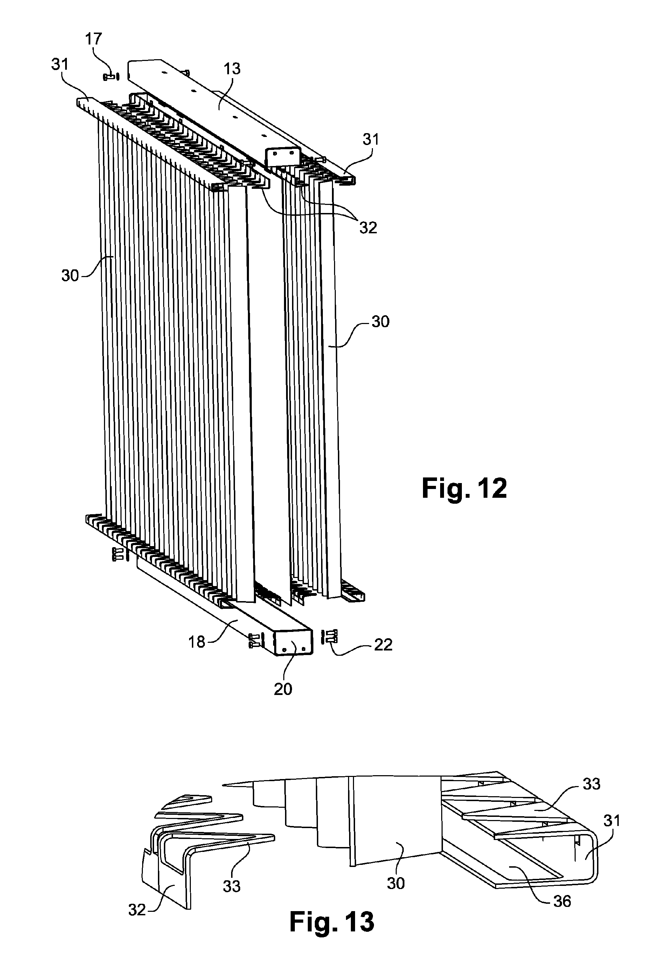

Comme cela est mieux visible en figure 13, chaque profilé comporte des dents 33 destinées à être insérées dans les zones en creux formées par la toile ondulée correspondante 30. Les dents 33 du profilé externe 31 s'étendent en direction de la tôle support 2 et les dents 33 du profilé interne 32 s'étendent vers l'extérieur. Les bords inférieurs et supérieurs des toiles 30 sont ainsi maintenus par coincement entre les dents 33 des profilés opposés 31, 32.

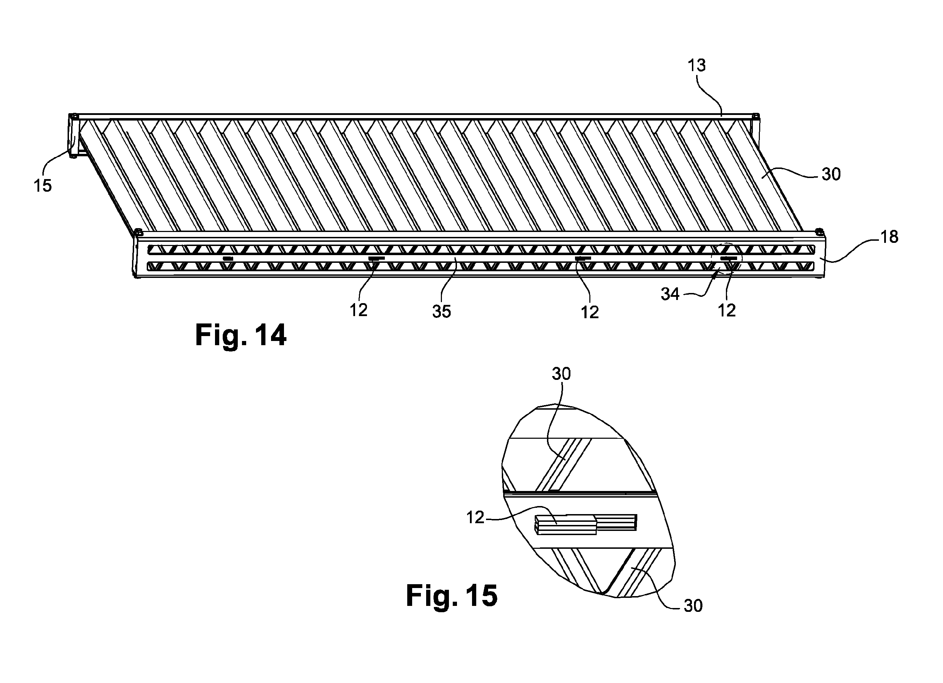

Le profilé inférieur 18 comporte, dans cette variante de réalisation, deux ouvertures oblongues 34 s'étendant sur la quasi-totalité de la longueur du profilé 18, les ouvertures 3' étant séparées par une bande médiane 35 permettant la fixation des crochets 12 de la tôle support 2 (figures 14 et 15).

Les profilés externes 31 des moyens d'accrochage comportent des ouvertures oblongues similaires 36, situées en regard des ouvertures 34 du profilé inférieur 18.

Les dents 33 des profilés internes inférieurs 32 sont également ajourées afin de permettre l'écoulement de l'eau dans les canaux de circulation 11 menant aux ouvertures 36 et 34. Il n'est pas nécessaire que les dents 33 des profilés externes 31 soient ajourées car celles-ci ne s'étendent pas en travers desdits canaux 11.

L'étanchéité est assurée le long des bords verticaux des toiles par des boulons du même type que ceux déjà décrits, fixés sur la tôle support ou au moyen de plats fixés sur la tôle support par des boulons et retenant les bords des toiles.

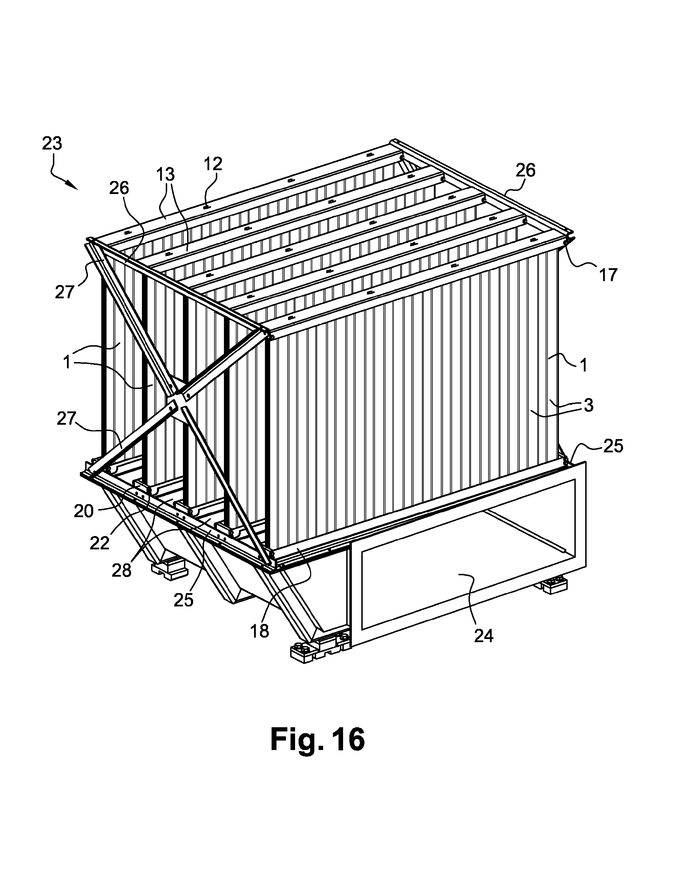

La figure 16 montre un module filtrant 23 selon l'invention, destiné à un circuit d'injection de sécurité et d'aspersion d'un réacteur nucléaire, comportant une pluralité de panneaux filtrants 1 fixés à un châssis comportant un caisson inférieur 24 formant canal de collecte et de circulation d'eau.

Le module comporte en outre deux profilés horizontaux 25, 26, respectivement inférieur et supérieur, au niveau des extrémités latérales des panneaux 1. Les panneaux 1 sont fixés aux profilés horizontaux supérieurs 26 par l'intermédiaire de vis vissées dans les trous 16 des plaques 15 et aux profilés horizontaux inférieurs 25 par l'intermédiaire de vis vissées dans les trous 21 des plaques 20.

Le module comporte de plus deux éléments de renforcement formés chacun de quatre poutres 27 agencées en diagonale et s'étendant en travers des extrémités des panneaux 1 sur deux faces latérales verticales du module 26.

Des entretoises 28 profilées en U sont montés sur le châssis entre les panneaux 1, plus précisément entre les profilés inférieurs 18.

Le châssis comporte enfin des plaques ajourées (non visibles), disposée sous les panneaux filtrants 1, et dont les dimensions des ouvertures de passage d'eau sont déterminées pour une uniformisation des débits dans plusieurs modules disposés en série. Les ouvertures des plaques situées à distance de la pompe de circulation sont plus grandes et engendrent donc moins de pertes de charge que les ouvertures des plaques les plus proches de la pompe.

La paroi supérieure du canal 24 de collecte et de circulation d'eau est ainsi fermée de manière étanche, seules les ouvertures 19 des panneaux filtrants 1 débouchant dans ledit canal 24.

Comme cela est connu de l'art antérieur, les modules 23 sont agencés en série. Dans le cas de l'invention, 16 modules sont agencés en série, chaque module comportant 5 panneaux filtrants.

Un module filtrant 23 est relié à un module adjacent par des joints en V par exemple en aluminium montés par élasticité entre les brides des extrémités des canaux des deux modules. Chaque module 23 comporte alors un point fixe autour duquel le module est soumis à des dilatations. Les joints sont dimensionnés de façon à pouvoir compenser ces dilatations.

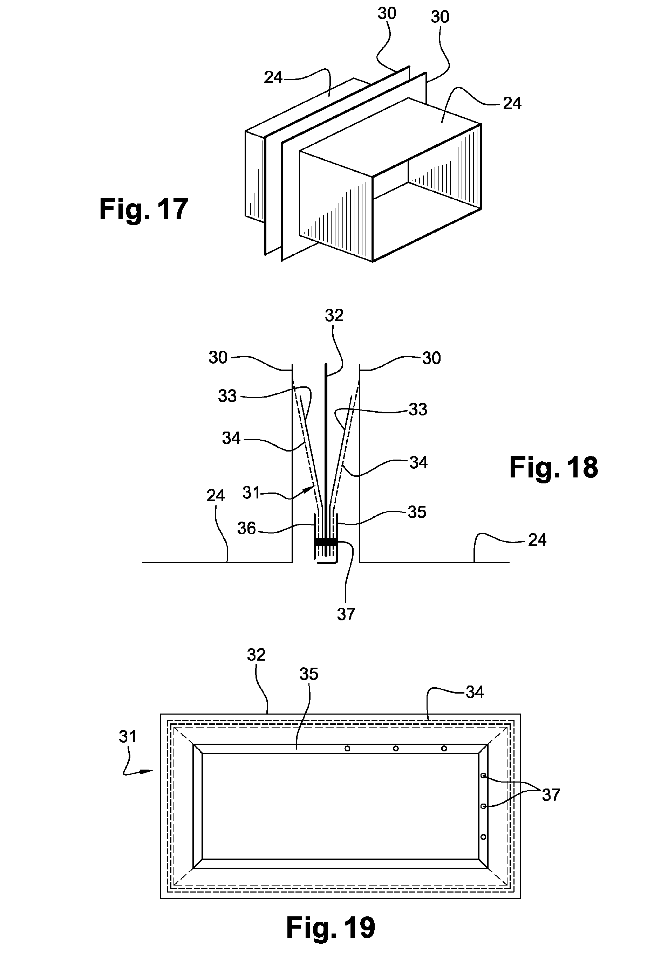

Comme représenté à titre d'exemple dans les figures 17 à 19, chaque joint 31 a une forme générale rectangulaire correspondant à la forme des brides 30 entre lesquelles il est monté, et comprend une plaque centrale 32 en forme de cadre rectangulaire sur chaque face de laquelle est fixée une tôle mince ou clinquant 33 formant ressort, recouverte extérieurement d'une toile 34 en fil d'acier inoxydable.

La fixation est réalisée sur le bord interne de la plaque centrale 32, au moyen d'une cornière en L 35 et d'un plat 36 qui serrent les bords des tôles minces 33 et des toiles 34 sur la plaque centrale 32 et qui sont assemblés par des plots soudés 37.

La plaque centrale 32 est d'une seule pièce, de même que les toiles 34 pour assurer la continuité de l'étanchéité dans les angles du joint, tandis que les tôles minces 33 sont formées de quatre bandes droites et que, de même, les cornières 35 et les plats 36 sont formés chacun de quatre éléments rectilignes.

Comme on le voit en figure 18, les tôles minces 33 et les toiles 34 s'écartent en V vers l'extérieur depuis le bord interne de la plaque centrale 32.

Le joint 31 peut être monté par glissement entre les brides 30 des canaux 24 des modules installés et permet de compenser les différences de position de ces brides l'une par rapport à l'autre. La pression qui est plus forte à l'extérieur des modules, agit à l'intérieur des V formés par les joints 31 et applique les tôles minces 33 et les toiles 34 sur les brides 30 des canaux des modules.

Lors du fonctionnement du circuit d'injection de sécurité et d'aspersion d'un réacteur nucléaire, l'eau contenue dans l'espace annulaire en partie basse de l'enceinte de confinement pénètre dans les canaux de circulation de fluide 11 au travers des performations des tôles 3, 4 des panneaux filtrants 1, puis débouche dans le canal 24 par l'intermédiaire des ouvertures 19, l'eau récoltée étant ensuite aspirée par la pompe.

Le sens de fonctionnement de la pompe peut être inversé de manière à ce que l'eau s'échappe par les perforations des tôles 3, 4. Ce mode de fonctionnement appelé « back-flushing » permet de décolmater, si nécessaire, les perforations des tôles 3, 4.

## Revendications

1. Panneau filtrant (1) pour un circuit d'injection de sécurité et d'aspersion d'un réacteur nucléaire, comportant une tôle support (2) sur laquelle est fixé au moins un élément filtrant tel qu'une tôle perforée (3, 4) ou une toile métallique, la tôle support et l'élément filtrant ménageant entre eux au moins un canal (11) de circulation d'eau de refroidissement, ledit canal (11) comportant une extrémité ouverte de sortie d'eau, **caractérisé en ce que** l'élément filtrant (3,4) est fixé à la tôle support (2) par des moyens d'accrochage (6, 9, 10) ou par boulonnage.

2. Panneau filtrant (1) selon la revendication 1, **caractérisé en ce que** les moyens d'accrochage comportent des ouvertures (6, 9) ménagées dans la tôle support (2), coopérant avec des crochets (10) de l'élément filtrant (3, 4), ou inversement.

3. Panneau filtrant (1) selon l'une la revendication 1 ou 2, **caractérisé en ce qu'**il comporte une pluralité de tôles perforées (3, 4) adjacentes les unes aux autres.

4. Panneau filtrant (1) selon l'une des revendications 1 à 3, **caractérisé en ce que** la ou chaque tôle perforée (3, 4) a une section en W.

5. Panneau filtrant (1) selon l'une des revendications 1 à 4, **caractérisé en ce qu'**il comporte au moins deux éléments filtrants (3, 4) accrochés de part et d'autre de la tôle support (2).

6. Panneau filtrant (1) selon l'une des revendications 1 à 5, **caractérisé en ce qu'**il comporte deux profilés inférieur et supérieur en U (18, 13), montés et fixés par accrochage sur les bords inférieur et supérieur de la tôle support (2), et **en ce que** le profilé inférieur (18) comporte des ouvertures (19) de passage de l'eau de refroidissement, disposées en regard des extrémités ouvertes des canaux (11) de circulation d'eau de refroidissement, les autres extrémités desdits canaux (11 ) étant fermées par le profilé supérieur (13).

7. Panneau filtrant (1) selon l'une des revendications 2 à 6, **caractérisé en ce que** les crochets (10, 12) sont formés sur les bords verticaux et/ou horizontaux des tôles perforées (3, 4) et/ou de la tôle support (2).

8. Panneau filtrant (1) selon l'une des revendications 1 et 5 à 7, **caractérisé en ce que** l'élément filtrant (3, 4) est ondulé et présente des zones en creux (31) en appui contre la tôle support (2) et des zones en saillie, l'élément filtrant étant fixé à la tôle support (2) à l'aide de boulons (30) montés dans certaines des zones en creux (31) et comportant un écrou (32) et/ou une tête de vis de section générale triangulaire ou trapézoïdale, ayant deux faces obliques (33) d'appui sur des flancs inclinés de l'élément filtrant (3, 4).

9. Panneau filtrant (1) selon l'une des revendications 1 à 8, **caractérisé en ce que** les moyens d'accrochage comportent des moyens de pincement (31, 32, 33) d'au moins un bord de l'élément filtrant (3, 4).

10. Panneau filtrant (1) selon la revendication 9, **caractérisé en ce que** l'élément filtrant (3, 4) étant ondulé et présentant des zones en creux, les moyens de pincement comportent deux profilés (31, 32) agencés de part et d'autre de l'élément filtrant (3, 4) et comprenant chacun des dents (33) insérées dans les zones en creux correspondantes, de manière à coincer le bord de l'élément filtrant (3, 4) entre les profilés (31, 32).

11. Module filtrant (23) destiné à un circuit d'injection de sécurité et d'aspersion d'un réacteur nucléaire, **caractérisé en ce qu'**il comporte une pluralité de panneaux filtrants (1) selon l'une des revendications 1 à 10, qui sont espacés les uns des autres par l'intermédiaire d'entretoises (28), et sont montés sur un châssis comportant un caisson inférieur formant canal de collecte et de circulation d'eau (24).

12. Module filtrant (23) selon la revendication 11, **caractérisé en ce qu'**il comporte deux éléments de renforcement comprenant chacun des poutres (27) agencées en croix et s'étendant en travers des extrémités des panneaux (1) sur deux faces latérales verticales du module (23).

13. Module filtrant (23) selon la revendication 11 ou 12, **caractérisé en ce que** le châssis comporte des plaques ajourées, disposées sous les panneaux filtrants (1), et dont les dimensions des ouvertures de passage d'eau sont déterminées pour une uniformisation des débits dans plusieurs modules disposés en série.

14. Module filtrant (23) selon la revendication 11 à 13, **caractérisé en ce qu'**il est relié à un module adjacent par des joints (31) en V montés par élasticité entre les brides d'extrémité (30) des canaux (24) des deux modules, chaque joint comprenant une plaque centrale sur laquelle sont fixées des tôles minces (33) formant ressort, recouvertes par des toiles (34) en fil d'acier inoxydable.
